## Europäisches Patentamt

## European Patent Office

## Office européen des brevets

(19)

(11) Veröffentlichungsnummer: **0 137 791**
**B1**

(12) # EUROPÄISCHE PATENTSCHRIFT

(45) Veröffentlichungstag der Patentschrift:
**14.09.88**

(51) Int. Cl.⁴: **B 01 D 39/20, C 22 B 9/02, C 04 B 35/00**

(21) Anmeldenummer: **84900492.4**

(22) Anmeldetag: **27.01.84**

(86) Internationale Anmeldenummer:
**PCT/CH 84/00012**

(87) Internationale Veröffentlichungsnummer:
**WO 84/03056 (16.08.84 Gazette 84/20)**

(54) **VERWENDUNG EINES KERAMISCHEN, MIT OFFENEN POREN VERSEHENEN KÖRPERS ZUM FILTRIEREN VON METALLEN.**

(30) Priorität: **11.02.83 CH 809/83**

(43) Veröffentlichungstag der Anmeldung:
**24.04.85 Patentblatt 85/17**

(45) Bekanntmachung des Hinweises auf die Patenterteilung:
**14.09.88 Patentblatt 88/37**

(84) Benannte Vertragsstaaten:
**AT CH DE FR GB LI SE**

(56) Entgegenhaltungen:
**EP - A - 0 076 781**
**CH - A - 576 275**
**FR - A - 2 075 328**
**FR - A - 2 302 979**
**US - A - 2 568 237**
**US - A - 2 621 131**
**US - A - 2 842 447**
**US - A - 4 278 544**

(73) Patentinhaber: **Schweizerische Aluminium AG, CH-8212 Neuhausen am Rheinfall (CH)**

(72) Erfinder: **KAMPFER, Konrad, Neuhausweg 20, CH-8240 Thayngen (CH)**
Erfinder: **RIEGER, Wolfhart, zur Mühle, CH-8263 Buch (CH)**
Erfinder: **GAUCKLER, Ludwig, Gemsgasse 11, CH-8200 Schaffhausen (CH)**
Erfinder: **DELLAPINA, Marco, Eichenstrasse 21, CH-8200 Schaffhausen (CH)**

## Beschreibung

Die Erfindung betrifft die Verwendung eines, mit offenen Poren versehenen keramischen Körpers zum Filtrieren von Metallen.

Bekannt sind poröse, keramische Filterkörper aus beliebig geformtem kugeligem oder hohlkugeligem, feuerfestem Material, welches mittels eines temporären Bindemittels zu einem porösen Körper geformt und durch ein temperaturbeständiges, weiteres Bindemittel oder durch Zusammensintern zu einem festen, porösen Körper verarbeitet werden. Dabei wird durch Hitzebehandlung das temporäre Bindemittel entfernt. Verwendung finden derartige Filterkörper beispielsweise bei der Filtration von schmelzflüssigen Metallen, insbesondere schmelzflüssigem Aluminium.

Die als Filter eingesetzten porösen Körper besitzen jedoch nur beschränkte Temperaturbeständigkeit, wenn als Bindemittel ein Glas, bzw. eine Fritte mit den üblichen Bestandteilen wie $Al_2O_3$, $SiO_2$, $B_2O_3$, CaO, MgO und Alkalioxide verwendet wird. Die Temperaturbeständigkeit reicht nicht über den Erweichungspunkt der Gläser oder Fritten hinaus. Weiterhin lässt die mechanische Stabilität bereits bei unterhalb des Erweichungspunktes liegenden Temperaturen entscheidend nach. Diese nachteiligen Eigenschaften sind der Grund für die beschränkte Einsetzbarkeit solcher Filter, insbesondere ist ein Einsatz im Temperaturbereich von 1000–1200 °C nicht möglich.

Nach der DE-OS 3 140 098 kann bei Verwendung von Hohlkugelkorund als Ausgangsmaterial und einer sinteraktiven Tonerde als Bindemittel bei hohen Temperaturen ein poröser Körper hergestellt werden, wobei die vorhandene Tonerde durch Sintern die Kugeln zusammenhält. Dieses Verfahren hat den Nachteil, dass die anzuwendenden Sintertemperaturen über 1700 °C liegen und dadurch hohe Brennkosten verursachen. Zudem ist die erreichte Bindung bei hohen Temperaturen mechanisch nicht ausreichend stabil, da die Zahl und die Vollkommenheit der erreichten Kontaktstellen zwischen den Körnern gering ist. Die Temperaturwechselbeständigkeit der Körper ist durch den hohen Ausdehnungskoeffizienten des Aluminiumoxids nicht günstig und lässt eine Verwendung der Körper als Filter für die Filtration hochschmelzender Metalle, wie beispielsweise Eisenlegierungen, ohne isothermes, in den meisten Fällen unmögliches oder schwer praktizierbares Vorwärmen, nicht zu.

Daraus erhellt, dass hochtemperaturbeständige, thermoschockfeste und ausreichend stabile Filterkörper nicht zur Verfügung stehen. Es fehlt somit insbesondere an porösen, formstabilen, mechanisch festen, thermisch bis über 1600 °C stabilen und thermoschockbeständigen Filterkörpern zum Filtrieren von Metallen, insbesondere Eisen und Eisenlegierungen. Aufgabe der vorliegenden Erfindung ist, diesen Mangel zu beheben, indem die Verwendung eines spezifische Eigenschaften aufweisenden keramischen Körpers vorgeschlagen wird.

Ein keramischer, hochporiger Körper, der vergleichbare Eigenschaften mit dem in der beanspruchten Verwendung benutzten keramischen Körper aufweist, ist aus der FR-A-2 075 328 bekannt.

Diese Druckschrift beschreibt ein Verfahren zum Herstellen eines mit Poren versehenen, bis 1600 °C temperaturbeständigen und einen linearen Ausdehnungskoeffizienten zwischen $3 \times 10^{-6}$ und $7 \times 10^{-6}/°C$ aufweisenden keramischen Körpers durch Temperaturbehandlung einer makroskopisch homogenen Struktur aus vorzugsweise hohlkugeligen Körnern eines Refraktärmaterials und einem refraktären, sich bei hoher Temperatur durch chemische Reaktion mit den Körnern verbindenden Bindematerial unter Bildung einer neuen feuerfesten Verbindung.

Zur Lösung der gestellten Aufgabe führt die Verwendung eines keramischen Körpers gemäss Patentanspruch 1 und in vorteilhafter Weise gemäss den Patentansprüchen 2 bis 8.

Das durch die chemische Reaktion entstandene Material ist refraktärer als das eingesetzte Bindematerial allein. Der makroskopisch homogene Verbundkörper hat nach dem Sintern einen Schmelzpunkt zwischen demjenigen der refraktären Körner vor dem Sintern und demjenigen des Bindematerials. Die Körner wachsen beim Sintern durch chemische Reaktion zusammen, ohne die äussere Geometrie zu ändern. Statt einer Volumenschrumpfung von 20–40% wie beim normalen Sinterprozess bleibt erfindungsgemäss die makroskopische Struktur völlig erhalten, ohne jede Schrumpfung.

Der Erfindung liegt die Beobachtung zugrunde, dass die Körner selbst durch chemische Reaktion so verändert werden, dass Körner und Bindung praktisch die gleiche Zusammensetzung und gesamthaft ein gleichmässig verteiltes, mindestens zweiphasiges Gefüge aufweisen.

Das Verfahren zum Herstellen eines keramischen, mit Poren versehenen Filterkörpers, insbesondere Filterkörpers zum Filtrieren von Eisen und Eisenlegierungen, besteht darin, dass die kugeligen Körner eines refraktären Materials mit einem pulverförmigen Bindematerial vermischt, zu einem mit offenen Poren versehenen Körper geformt werden und dieser durch einen Temperaturbehandlungsprozess unter Beibehaltung der makroskopisch homogenen, offenporigen Struktur und Bildung neuer feuerfester Verbindungen im Bereich der Kontaktflächen chemisch zu einem nicht geschrumpften Filterkörper mit unveränderter Geometrie der inneren Porenstruktur, welche für das Filtrieren relevant ist, umgesetzt wird.

Überraschenderweise kann die Umsetzung der Korn- und Bindemittelkomponenten so geführt werden, dass entgegen allen früheren Erfahrungen beim Sintern der obengenannten Komponenten keine makroskopisch feststellbare Dimensionsänderung der Filterkörper eintritt und der durch die Wahl der Körner vorgelegte innere Aufbau des porösen Körpers erhalten bleibt.

Wird beispielsweise die Kornkomponente mit A, die Bindemittelkomponente mit B und das durch Reaktion zwischen A und B entstandene Produkt mit C bezeichnet, so bestehen dagegen folgende extreme Möglichkeiten:

Ist der Anteil an A zu hoch, so wird die Reaktion erst bei sehr hoher Temperatur ablaufen und zu einem A-reichen Mischprodukt C führen. Es zeigte sich, dass Körper, die eine solche Zusammensetzung aufweisen, geringe Festigkeit und schlechte Thermoschockbeständigkeit haben.

Ist andererseits der Anteil an B zu hoch, so läuft die Reaktion mit A so ab, dass sowohl die Form als auch die Anordnung der Körner nicht beibehalten wird; der Formkörper zerfliesst oder wird derart deformiert, dass die beabsichtigten Porengrössen und -anteile in unkontrollierbarer Weise verändert werden, was sich unter anderem durch hohe lineare Schwindung und geringe Formtreue zu erkennen gibt.

Beide Möglichkeiten führen somit nicht zu einem Gegenstand, der erfindungsgemäss Verwendung findet.

Beispiele

Es wurden verschiedene Mischungen zwischen den Komponenten A – Korund, Hohlkugelkorund, Hohlkugelzirkonkorund – und B – Magnesiumsilikat als Speckstein und Kalziumsilikat als Wollastonit – hergestellt und einem Temperaturbehandlungsprozess unterworfen.

Beispiel 1

Hohlkugelkorund der Körnung 2 bis 5 mm wurde mit Speckstein ($3 MgO \cdot 4 SiO_2$) in den Verhältnissen (Gewichtsteile) 25:75, 30:70, 35:65, 40:60 und 45:55, unter Zugabe eines organischen Bindemittels (Optapix) und Wasser 5 Min. in einen Trommelmischer gemischt und anschliessend in zylindrische Aluminiumformen mit einem Durchmesser von 100 mm und einer Höhe von 35 mm eingerüttelt. Anschliessend wurde die Masse bei 80 °C 24 h lang in der Form getrocknet, entformt und in 48 h auf 1650 °C aufgeheizt, 2 h bei dieser Temperatur gehalten und in 72 h wieder auf Raumtemperatur abgekühlt. Die Formkörper wurden optisch und röntgenographisch auf Schwindung, Festigkeit, Formveränderung, Struktur der Kugelschüttung und Phasenbestand untersucht. Die Ergebnisse sind in Tabelle 1 zusammengefasst.

Nach Tabelle 1 ist somit ein Formkörper mit guter Formbeständigkeit und ausreichender Festigkeit nur im Bereich von 75 bis 60 Gewichtsprozent der Komponente A möglich. Zu hoher Anteil der hochschmelzenden Komponente A führt zu nicht ausreichender Bindung und zu geringer Festigkeit, zu hoher Anteil der Komponente B führt zu starker Verformung, Schwindung und Verlaufen des Filters beim Sinterprozess.

Beispiel 2

In gleicher Weise wie in Beispiel 1 beschrieben wurden Mischungen von Hohlkugelkorund (Komponente A) und Wollastonit, $CaO \cdot SiO_2$, (Komponente B) hergestellt, geformt und gesintert. Die Sintertemperatur betrug 1600 °C. Tabelle 2 zeigt die Ergebnisse.

Beispiel 3

Ähnlich wie in den vorigen Beispielen wurden 1000 Teile Hohlkugelkorund der Körnung 2 bis 5 mm mit 300 Teilen Speckstein ($3MgO \cdot 4SiO_2$) unter Zugabe von 140 Teilen Wasser und 60 Teilen eines organischen Bindemittels (technisches Polysacharid) in einen Trommelmischer 5 Min. lang vermischt. Anschliessend wurde die Masse in Aluminiumformen mit 100 mm Durchmesser und 35 mm Höhe eingerüttelt und bei 80 °C 24 h getrocknet. Nach der Entformung wurden die getrockneten Körper in einem gasbefeuerten Ofen in 48 h auf 1650 °C aufgeheizt und nach einer Haltezeit von 2 h in 72 h auf Raumtemperatur abgekühlt.

Die entstandenen Produkte waren rissfrei, formbeständig, fest und wiesen gegenüber dem anfänglichen Formzustand keinen Schwund auf. Veränderungen in Aufbau und Form der Körper waren optisch nicht feststellbar.

Bei keramographischer Untersuchung erwies sich im Anschliff, dass sich der mikrostrukturelle Aufbau der Körner im Vergleich zu Korundkörnern, die keine Umsetzung erfahren hatten, grundlegend geändert hatte. Feststellbar waren sowohl optisch als auch bei röntgenographischer Untersuchung die Phasen Spinell, Korund, Mullit sowie ein Anteil an Glasphase. Die kristallinen Komponenten waren dabei deutlich erkennbar und im allgemeinen homogen in der Glasphase verteilt. Zwischen Hohlkugelkorund und Speckstein hatte eine chemische Umsetzung stattgefunden.

Auf den nichtvorgewärmten Filterkörper wurden bei einer Temperatur von 1500 °C 40 kg einer geschmolzenen Eisenlegierung (Grauguss) geleitet. Diese passierte in 2 Min. den Filter und wurde in einer Wanne aufgefangen. Der Filter zeigte nach der Abkühlung keinerlei Veränderung, war formstabil und frei von Kornausbrüchen. Die im Filter zurückbleibende Metallmenge war gering, was auf eine gute Isolationswirkung des Filters schliessen lässt. An der Oberfläche des Filters konnten aus der Schmelze der Eisenlegierung stammende oxidische und Schlackenverunreinigungen festgestellt werden. Die Eisenlegierungsmenge, die das Filter passierte, wies hingegen keine oxidischen Anteile oder andere Bruchteile des Filters auf. Die Legierung war praktisch frei von Verunreinigungen. Die Analyse der auf dem Filter zurückgebliebenen Verunreinigungen ergab die Anwesenheit oxidischer, karbidischer und sulfidischer Phasen.

Beispiel 4

Hohlkugelkorund der Körnung 0,2–1 mm wurde mit 10 Gew.-% eine Mischung von 48 Gew.-% $Al_2O_3$ und 52 Gew.-% $SiO_2$ unter Zugabe eines Bindemittels (Optapix) und Wasser wie in den vorigen Beispielen beschrieben gemischt, geformt und nach Trocknung bei 1700 °C eine Stunde gesintert.

Die resultierenden Körper wurden wiederum optisch, keramographisch und röntgenographisch untersucht. Es zeigt sich das Vorhandensein von Mullit neben Korund im gesamten Bereich der kugeligen Körner. Im Heissbiegeversuch (Plattengrösse 50 × 5 mm, 3-Punkt-Belastung) konnte eine Biegefestigkeit von 30 N/cm² bei 1200 °C und von 1 N/cm² bei 1700 °C gemessen werden. Die Biegefestigkeit im kalten Zustand wurde mit 300 N/cm² bestimmt. Die Festigkeiten entsprechen somit den Anforderungen.

Beispiel 5

Hohlkugelkorund der Körnung 2 bis 5 mm wurde, wie in Beispiel 1 bis 3 beschrieben, mit 20 Gew.-% Zirkonoxid und Quarzmehl im Verhältnis 1:1 gemischt und in vorbeschriebener Weise verarbeitet. Die Sintertemperatur betrug 1650 °C. Die röntgenographische Analyse ergab die Phasen Korund und Baddeleyit ($ZrO_2$) neben Zirkon ($ZrSiO_4$) und Mullit. Gemäss keramographischer Analyse war eine Reaktion zwischen den Korundkörnern und den anderen Komponenten nur an der Oberfläche der Körner festzustellen. Die Festigkeit der Körper bei Raumtemperatur entsprach den Anforderungen. Eine Formänderung war nicht festzustellen.

Beispiel 6

Hohlkugelkorund der Körnung 2 bis 8 mm wurde analog, wie in Beispiel 1 bis 3 beschrieben, mit 20 Gew.-% Zirkonsilikat ($ZrSiO_4$) und 10 Gew.-% Speckstein gemischt und in vorbeschriebener Weise verarbeitet. Die Sintertemperatur betrug 1650 °C.

Die röntgenographische Analyse ergab die Anwesenheit der Phasen Korund, Baddeleyit, Zirkon, Mullit sowie eine Glasphase. Die keramographische Analyse zeigt, dass die Reaktion das gesamte Volumen des Hohlkugelkorunds erfasst hatte. Die Festigkeit der Körper bei Raumtemperatur war gut. Eine Formveränderung war nicht festzustellen.

Weitere Merkmale und Einzelheiten des verwendeten Keramikfilters ergeben sich aus den folgenden Bildern:

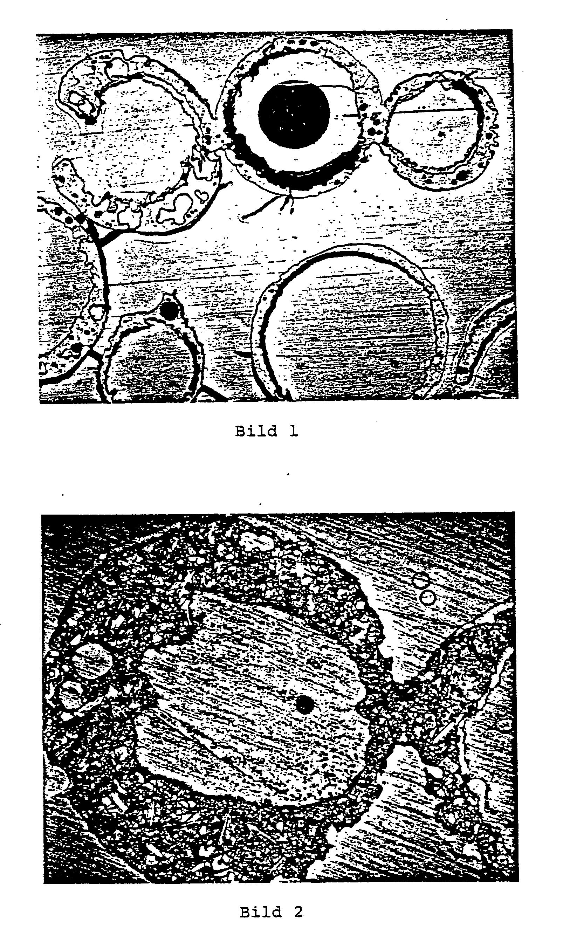

Bild 1 zeigt einen Anschliff eines Körpers aus Hohlkugelkorund mit einer Körnung 2 bis 5 mm und 30% Speckstein nach Reaktion bei 1650 °C in 12,8-facher Vergrösserung.

Bild 2 zeigt einen Ausschnitt aus Bild 1 mit 32-facher Vergrösserung.

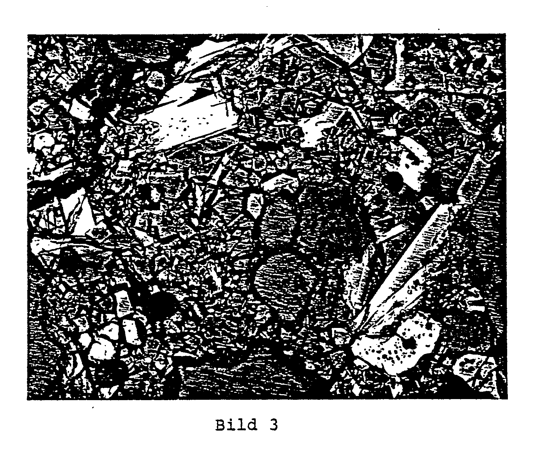

Bild 3 zeigt einen Ausschnitt aus Bild 2 mit 160-facher Vergrösserung.

Tabelle 1

| Mischung | Komponente A Hohlkugelkorund % | Komponente B Speckstein % | Schwindung linear % | Festigkeit | Formveränderung | Struktur der Kugelschüttung | Phasen gem. röntgenogr. Analyse |
|---|---|---|---|---|---|---|---|
| 1 | 75 | 25 | 0 | gut | keine | unverändert | $\alpha + M + Sp + G$ |
| 2 | 70 | 30 | 0 | gut | keine | unverändert | $\alpha + M + Sp + G$ |
| 3 | 65 | 35 | 0 | gut | keine | unverändert | $\alpha + M + Sp + G$ |
| 4 | 60 | 40 | 0 | gut | keine | unverändert | $\alpha + M + G$ |

$\alpha$ = Alpha-$Al_2O_3$
M = Mullit ($3Al_2 \cdot 2SiO_2$)
Sp = Spinell ($MgAl_2O_4$)
G = Glasphase

Tabelle 2

| Mischung | Komponente A Hohlkugelkorund % | Komponente B Wollastonit % | Schwindung linear % | Festigkeit | Formveränderung | Struktur | Phasen gem. röntgenogr. Analyse |
|---|---|---|---|---|---|---|---|
| 1 | 90 | 10 | 0 | ausreich. | keine | unverändert | $\alpha + Q$ |
| 2 | 85 | 15 | 0 | gut | keine | unverändert | $\alpha + An + Q$ |
| 3 | 80 | 20 | 0 | gut | keine | unverändert | $\alpha + An + Q$ |
| 4 | 75 | 25 | 0 | gut | keine | unverändert | $\alpha + An + Q$ |

$\alpha$ = Alpha-$Al_2O_3$
An = Anorthit
Q = Alpha-Quarz

## Patentansprüche

1. Verwendung eines mit offenen Poren versehenen, bis 1600 °C temperaturbeständigen und einen linearen Ausdehnungskoeffizienten zwischen $3 \times 10^{-6}$ und $7 \times 10^{-6}/°C$ aufweisenden keramischen Körpers zum Filtrieren von Metallen, insbesondere von Eisen und Eisenlegierungen, gebildet durch Temperaturbehandlung eines eine offene Porosität von 25 bis 55% aufweisenden Grünkörpers bei 1400 bis 1700 °C, wobei der Grünkörper aus einer makroskopisch homogenen Mischung von kugeligen, vorzugsweise hohlkugeligen Körnern eines Refraktärmaterials mit einer Grösse von 0,2 bis 8 mm und eines pulverförmigen refraktären, sich bei der Behandlungstemperatur durch chemische Reaktion mit den Körnern verbindenden Bindematerials unter Bildung mindestens einer neuen feuerfesten Verbindung besteht, wobei keine makroskopisch feststellbare Dimensionsänderung bei der Temperaturbehandlung des Grünkörpers eintritt.

2. Verwendung eines Körpers nach Anspruch 1, dadurch gekennzeichnet, dass Körner mit einer Grösse von 0,5 bis 5 mm verwendet werden.

3. Verwendung eines Körpers nach Anspruch 1 oder 2, dadurch gekennzeichnet, dass als Refraktärmaterial mindestens eines der Oxide von Magnesium, Aluminium, Chrom und Zirkon, vorzugsweise Korund, Zirkonkorund, Spinell, Mullit, Anorthit oder Celsian, als Bindematerial mindestens eines der Oxide von Magnesium, Kalzium, Barium, Aluminium, Silizium, Titan und Zirkon, vorzugsweise Magnesium- oder Kalziumsilikat, verwendet wird.

4. Verwendung eines Körpers nach einem der Ansprüche 1 bis 3, dadurch gekennzeichnet, dass zusätzlich als temporäres Bindematerial ein Glas in gegenüber dem Refraktär- und Bindematerial untergeordneter Menge und/oder ein Zirkon enthaltender Bestandteil verwendet wird.

5. Verwendung eines Körpers nach einem der Ansprüche 1 bis 4, dadurch gekennzeichnet, dass der Temperaturbehandlung bei 1500 °C bis 1600 °C erfolgt und die Haltezeit bei Maximaltemperatur zwischen 15 und 120 Min. beträgt.

6. Verwendung eines Körpers nach einem der Ansprüche 1 bis 5, dadurch gekennzeichnet, dass beim Einsatz von Hohlkugelkorund als kugelige Körner und Speckstein als Bindematerial das Gewichtsverhältnis von Hohlkugelkorund zu Speckstein im Bereich von 75:25 bis 60:40 liegt.

7. Verwendung eines Körpers nach einem der Ansprüche 1 bis 5, dadurch gekennzeichnet, dass beim Einsatz von Hohlkugelkorund als kugelige Körner und Wollastonit als Bindematerial das Gewichtsverhältnis von Hohlkugelkorund zu Wollastonit im Bereich von 90:10 bis 75:25 liegt.

8. Verwendung eines Körpers nach einem der Ansprüche 1 bis 5, dadurch gekennzeichnet, dass beim Einsatz von Hohlkugelzirkonkorund als kugelige Körner und Speckstein als Bindematerial das Gewichtsverhältnis von Hohlkugelzirkonkorund und Speckstein im Bereich von 50:50 bis 85:15, vorzugsweise 65:35 bis 75:25, liegt.

## Claims

1. Use of a ceramic body, furnished with open pores, temperature-resistant up to 1,600 °C and having a linear coefficient of expansion between $3 \times 10^{-6}$ and $7 \times 10^{-6}/°C$, for the filtration of metals, especially iron and iron alloys, formed by temperature treatment of a green compact possessing an open porosity of 25 to 55% at 1,400 to 1,700 °C, the green compact consisting of a macroscopically homogeneous mixture of spherical, preferably hollow spherical grains of a refractory material having a size of 0.2 to 8 mm and of a pulverulent, refractory binding material which bonds at the treatment temperature with the grains by chemical reaction to form at least one novel refractory compound, no macroscopically detectable dimensional change occurring in the temperature treatment of the green compact.

2. Use of a body according to Claim 1, characterized in that grains having a size of 0.5 to 5 mm are used.

3. Use of a body according to Claim 1 or 2, characterized in that, as refractory material, at least one of the oxides of magnesium, aluminium, chromium and zirconium, preferably corundum, zirconium corundum, spinel, mullite, anorthite or celsian are used and, as binding material, at least one of the oxides of magnesium, calcium, barium, aluminium, silicon, titanium and zirconium, preferably magnesium or calcium silicate are used.

4. Use of a body according to one of Claims 1 to 3, characterized in that a glass in a quantity subordinate to that of the refractory material and binding material and/or a component containing zirconium, is used additionally as temporary binding material.

5. Use of a body according to one of Claims 1 to 4, characterized in that the temperature treatment takes place at 1,500 to 1,600 °C and the holding time at maximum temperature is between 15 and 120 minutes.

6. Use of a body according to one of Claims 1 to 5, characterized in that, where hollow spherical corundum is used as spherical grains and steatite as binding material, the ratio by weight of hollow spherical corundum to steatite lies in the range from 75:25 to 60:40.

7. Use of a body according to one of Claims 1 to 5, characterized in that, where hollow spherical corundum is used as spherical grains and wollastonite as binding material, the ratio by weight of hollow spherical corundum to wollastonite lies in the range from 90:10 to 75:25.

8. Use of a body according to one of Claims 1 to 5, characterized in that, where hollow spherical zirconium corundum is used as spherical grains and steatite as binding material, the ratio by weight of hollow spherical zirconium corundum and steatite lies in the range from 50:50 to 85:15, preferably 65:35 to 75:25.

## Revendications

1. Utilisation d'un corps céramique à pores ouverts, stable thermiquement jusqu'à 1600 °C et présentant un coefficient de dilatation linéaire compris entre $3 \times 10^{-6}$ et $7 \times 10^{-6}/$ °C, pour la filtration de métaux, en particulier de fer et d'alliages de fer, formé par traitement thermique à 1400–1700 °C d'un corps vert ayant une porosité de 25 à 55%, le corps vert consistant en un mélange homogène à l'échelle macroscopique d'une matière réfractaire en billes, de préférence en billes creuses d'une grosseur de 0,2 à 8 mm, et d'un liant réfractaire en poudre se combinant avec les grains par réaction chimique à la température du traitement avec formation d'au moins un nouveau composé réfractaire, sans variation de dimensions décelable macroscopiquement du corps vert dans le traitement thermique.

2. Utilisation d'un corps selon la revendication 1, caractérisée en ce que l'on utilise des grains d'une dimension de 0,5 à 5 mm.

3. Utilisation d'un corps selon la revendication 1 ou 2, caractérisée en ce que l'on utilise comme matière réfractaire au moins un des oxydes de magnésium, d'aluminium, de chrome et de zirconium, de préférence corindon, corindon au zirconium, spinelle, mullite, anorthite ou celsian, comme liant au moins un des oxydes de magnésium, calcium, baryum, aluminium, silicium, titane et zirconium, de préférence silicate de magnésium ou de calcium.

4. Utilisation d'un corps selon l'une des revendications 1 à 3, caractérisée en ce que l'on utilise en outre comme liant temporaire un verre en faible quantité par rapport au liant réfractaire et/ou un constituant contenant du zirconium.

5. Utilisation d'un corps selon l'une des revendications 1 à 4, caractérisée en ce que le traitement thermique s'effectue à 1500–1600 °C et la durée de maintien à la température maximale est comprise entre 15 et 120 min.

6. Utilisation d'un corps selon l'une des revendications 1 à 5, caractérisée en ce que dans l'utilisation de corindon en billes creuses comme grains sphériques et de stéatite comme liant, le rapport pondéral du corindon en billes creuses à la stéatite est compris dans le domaine de 75:25 à 60:40.

7. Utilisation d'un corps selon l'une des revendications 1 à 5, caractérisée en ce que dans l'utilisation de corindon en billes creuses comme grains sphériques et de wollastonite comme liant, le rapport pondéral du corindon en billes creuses à la wollastonite est compris dans le domaine de 90:10 à 75:25.

8. Utilisation d'un corps selon l'une des revendications 1 à 5, caractérisée en ce que dans l'utilisation de corindon au zirconium en billes creuses comme grains sphériques et de stéatite comme liant, le rapport pondéral du corindon au zirconium en billes creuses à la stéatite est compris dans le domaine de 50:50 à 85:15, de préférence de 65:35 à 75:25.

Bild 1

Bild 2

Bild 3